# EUROPÄISCHE PATENTANMELDUNG

(11) **EP 0 708 575 A2**
(43) Veröffentlichungstag der Anmeldung: **24.04.1996**
(21) Anmeldenummer: 95116376.5
(22) Anmeldetag: 18.10.1995
(51) Int. Cl.: H04Q 11/04, H04M 19/08, H04M 11/06

(54) **Netzabschlusseinrichtung eines diensteintegrierenden digitalen Netzes**

(30) Priorität: 18.10.1994 DE 4437215
(71) Anmelder: Alcatel SEL Aktiengesellschaft, D-70435 Stuttgart (DE)
(72) Erfinder: Aschrafi, Bagher, D-73240 Wendlingen (DE)
(74) Vertreter: Schätzle, Albin, Dipl.-Phys.

(57) **Zusammenfassung**

Eine Netzabschlußeinrichtung (NTE) eines diensteintegrierenden digitalen Netzes, insb. ISDN, beinhaltet einen Netzabschluß (NT) mit zwei S₀-Schnittstellen zur Aufteilung der netaseitig verfügbaren zwei B-Kanäle auf zwei Teilnehmer, zwei Endstellenleitungen (BUS1, BUS2) und zwei Stromversorgungen (AC/DC1, AC/DC2). Jede Endstellenleitung (BUS) ist einerseits mit dem Netzabschluß (NT) und andererseits mit einer separaten Stromversorgung (AC/DC) verbunden. Jede Stromversorgung (AC/DC) ist außerhalb des Netzabschlusses (NT) und in den Räumen eines Teilnehmers (TN) angeordnet. Die an die jeweilige Endstellenleitung anschließbaren Teilnehmerendgeräte (TE) können über die zugehörige Stromversorgung (AC/DC) gespeist werden.

## Beschreibung

Die Erfindung betrifft eine Netzabschlußeinrichtung eines diensteintegrierenden digitalen Netzes nach dem Oberbegriff des Patentanspruchs 1.

In dem Artikel "Wirtschaftlicher Zugang zum ISDN" aus telecom report 12 (1989) Heft 1-2, Seiten 14-17, ist ein Netzabschlußgerät für den ISDN-Hauptanschluß beschrieben. Das Netzabschlußgerät beinhaltet einen Gleichspannungsumsetzer zur Speisung der internen Schaltkreise und zur Bereitstellung einer Notversorgungsspannung, sowie eine Lokalspeisung zur Speisung von Endgeräten über den S₀-Bus. Die Lokalspeisung hat einen 220 Volt Anschluß, der vom Teilnehmer gespeist wird. Das Netzabschlußgerät muß infolgedessen in den Räumen des Teilnehmers und in der Nähe eines 220 Volt Anschlusses installiert werden.

In der Druckschrift DE 41 24 118 A1 ist ein Fernmeldekonzept mit einer Konzentration von acht Analogteilnehmern auf einen ISDN-Basisanschluß beschrieben. Die acht Analogteilnehmer sind über einen Multiplexer an den ISDN-Basisanschluß angeschlossen. Gesteuert über eine Vermittlungstechnik können jeweils nur zwei der acht Analogteilnehmer gleichzeitig Informationen über die beiden B-Kanäle des ISDN-Basisanschlusses übertragen. Es handelt sich hierbei um ein starres Konzept, das jedem Teilnehmer die gleiche Übertragungskapazität zur Verfügung stellt und außerdem auf analoge Teilnehmer beschränkt ist.

Es ist deshalb Aufgabe der Erfindung, Nutzinformationskanäle Endstellen flexibler zuzuordnen.

Diese Aufgabe wird durch die Lehre des Patentanspruchs 1 gelöst. Vorteilhafte Ausgestaltungen sind den abhängigen Ansprüchen zu entnehmen.

Ein besonderer Vorteil der Erfindung liegt darin, bei einem Netzabschluß, der für mehrere Teilnehmer ausgelegt ist, die Speisung der Endgeräte der einzelnen Teilnehmer separat durchzuführen.

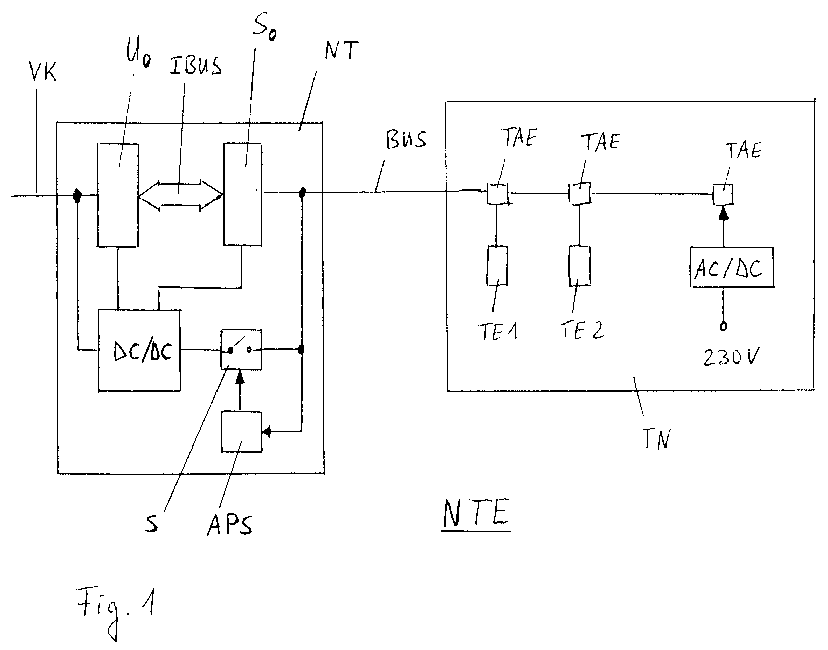

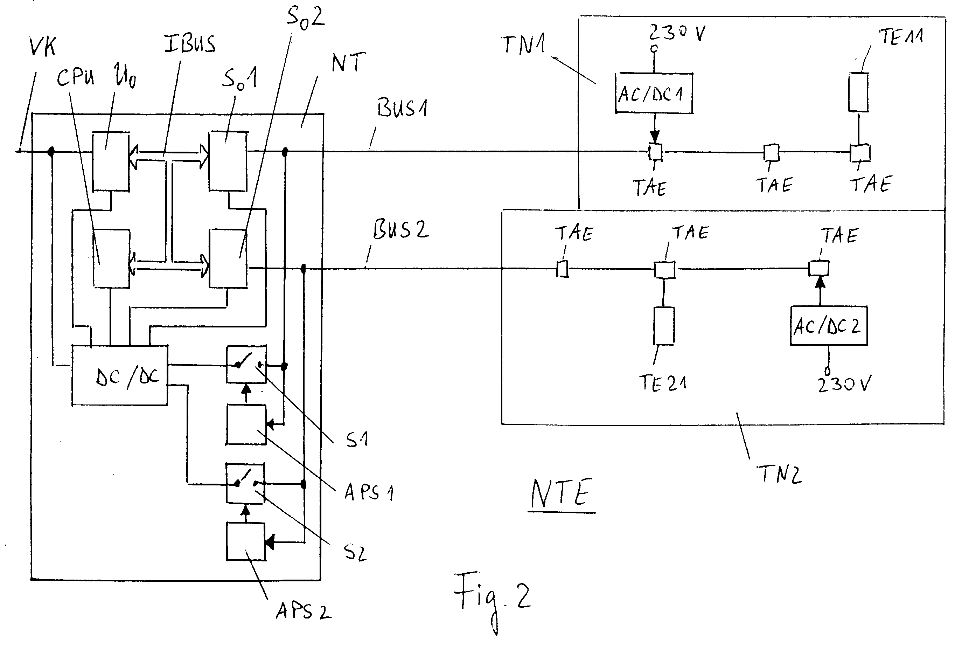

Im folgenden wird die Erfindung anhand eines Ausführungsbeispiels unter Zuhilfenahme der Figuren 1 und 2 erläutert. Es zeigen:
- Fig. 1: eine schematische Darstellung eines einer Netzabschlußeinrichtung nach dem Stand der Technik, und
- Fig. 2: eine schematische Darstellung eines Ausführungsbeispiels einer erfindungsgemäßen Netzabschlußeinrichtung.

Fig. 1 zeigt eine Netzabschlußeinrichtung NTE eines diensteintegrierenden digitalen Netzes, des sog. ISDN. Die Netzabschlußeinrichtung NTE beinhaltet einen Netzabschluß NT, eine Endstellenleitung BUS mit Telekommunikationsanschlußeinheiten TAE und einen AC/DC-Wandler AC/DC, wie z.B. aus den CCITT Recommendation I. 430, Seite 48 bis 53 bekannt.

Der Netzabschluß NT hat eine U₀-Schnittstelle U₀ und eine S₀-Schnittstelle S₀, die miteinander über einen internen Bus IBUS verbunden sind und entspricht damit dem Netzabschluß für die Basisanschlußkonfiguration beim ISDN. Die U₀-Schnittstelle U₀ ist ferner über ein Verzweigungskabel VK mit einer nicht abgebildeten Vorfeldeinrichtung verbunden. Die S₀-Schnittstelle S₀ ist über die Endstellenleitung BUS mit den Endgeräten TE1, TE2 eines Teilnehmers TN verbunden. Der Netzabschluß NT beinhaltet weiterhin einen DC/DC-Wandler DC/DC, einen Schalter S und eine Spannungsüberwachungseinrichtung APS. Der DC/DC-Wandler DC/DC erhält seine Eingangsgleichspannung durch Fernspeisung über das Verzweigungskabel VK. Er versorgt die U₀-Schnittstelle U₀ und die S₀-Schnittstelle S₀ mit Strom und stellt eine Notversorgungsspannung (-40 Volt) zur Verfügung.

Die Spannungsüberwachungseinrichtung APS überwacht die Spannung auf der Endstellenleitung BUS und steuert die Stellung des Schalters S. Die Notversorgungsspannung des DC/DC-Wandlers DC/DC dient im Falle eines durch die Spannungsüberwachungseinrichtung APS detektierten Versorgungsspannungsausfalls auf der Endstellenleitung BUS zur Notversorgung eines Teilnehmerendgerätes. Sie wird über den durch die Spannungsüberwachungseinrichtung APS angesteuerten Schalter S auf die Endstellenleitung BUS geschaltet.

Die Endstellenleitung BUS ist beim Ausführungsbeispiel ein S₀-Bus BUS. Sie verbindet die Teilnehmerendgeräte TE1, TE2 mit der S₀-Schnittstelle S₀. In den S₀-Bus BUS sind Telekommunikationsanschlußeinheiten TAE zum Anschluß von Teilnehmerendgeräten TE1, TE2 eingefügt. Eine beliebige Telekommunikationsanschlußeinheit TAE ist mit dem AC/DC-Wandler AC/DC verbunden. Der AC/DC-Wandler AC/DC ist außerhalb des Netzabschlusses NT angeordnet. Er hat eine Eingangswechselspannung und eine Ausgangsgleichspannung. Die Eingangswechselspannung ist eine Spannung im Bereich von 220-230 Volt, die vom Teilnehmer TN geliefert wird. Aus diesem Grund befindet sich der AC/DC-Wandler AC/DC in den Räumen des Teilnehmers TN. Die Ausgangsgleichspannung liegt im Bereich um 40 Volt (+ 5%, - 20% gemäß CCITT I 430) und stellt eine Leistung von ca. 4,5 Watt zur Verfügung. Sie wird über eine Telekommunikationsanschlußeinheit TAE auf den S₀-Bus BUS geschaltet und dient der Versorgung wenigstens eines Teilnehmerendgerätes TE1, TE2. Nur im Falle eines Ausfalls der Ausgangsgleichspannung des AC/DC-Wandlers AC/DC wird ein Teilnehmerendgerät gesteuert durch die Spannungsüberwachungseinrichtung APS über den DC/DC-Wandler DC/DC des Netzabschlusses NT notversorgt.

Fig. 2 zeigt ein Ausführungsbeispiel einer erfindungsgemäßen Netzabschlußeinrichtung NTE eines diensteintegrierenden digitalen Netzes, des sog. ISDN. Die Netzabschlußeinrichtung NTE beinhaltet einen Netzabschluß NT, zwei Endstellenleitungen BUS 1, BUS 2 mit Telekommunikationsanschlußeinheiten TAE und zwei AC/DC-Wandler AC/DC1, AC/DC2.

Der Netzabschluß NT hat eine U₀-Schnittstelle U₀, zwei S₀-Schnittstellen S₀1, S₀2 und eine Steuereinheit CPU, die über einen internen Bus IBUS miteinander verbunden sind. Die U₀-Schnittstelle U₀ ist ferner über ein Verzweigungskabel VK mit einer nicht abgebildeten Vorfeldeinrichtung verbunden. Die S₀-Schnittstellen S₀1, S₀2 sind über separate Endstellenleitungen BUS1, BUS2 mit den Endgeräten TE11, TE21 zweier Teilnehmer TN1, TN2 verbunden. An der U₀-Schnittstelle U₀ stehen mehrere Nutzinformationskanäle, z.B. zwei B-Kanäle (je 64 kbit/s) und wenigstens ein Signalisierungskanal, z.B. ein D-Kanal (16 k/bits) zur Übertragung von in Rahmen strukturierten Informationen zur Verfügung. Die Steuereinheit CPU teilt die beiden B-Kanäle auf die beiden S₀-Schnittstellen auf, so daß jedem Teilnehmer TN1, TN2 ein B-Kanal zur Übertragung zur Verfügung gestellt wird. Die Aufteilung der netzseitig verfügbaren Nutzinformationskanäle ist vorgegeben.

Der Netzabschluß NT beinhaltet weiterhin einen DC/DC-Wandler DC/DC, zwei Schalter S1, S2 und zwei Spannungsüberwachungseinrichtungen APS1, APS2. Der DC/DC-Wandler DC/DC erhält seine Eingangsgleichspannung durch Fernspeisung über das Verzweigungskabel VK. Er versorgt die U₀-Schnittstelle U₀, die beiden S₀-Schnittstellen S₀1, S₀2 und die Steuereinheit CPU mit Strom und stellt zwei Notversorgungsspannungen zur Verfügung. Wie beim Netzabschluß NT aus Fig. 1 werden die Notversorgungsspannungen bei Versorgungsspannungsausfall auf einer der Endstellenleitungen BUS1, BUS2 über die durch die Spannungsüberwachungseinrichtungen APS1, APS2 angesteuerten Schalter S1, S2 auf die jeweiligen Endstellenleitungen BUS1, BUS2 geschaltet.

Die Endstellenleitungen BUS1, BUS2 sind beim Ausführungsbeispiel S₀-Busse. Sie verbinden die Teilnehmerendgeräte TE11, TE21 mit der zugehörigen S₀-Schnittstelle S₀1, S₀2. In jeden S₀-Bus S₀1, S₀2 sind Telekommunikationsanschlußeinheiten TAE zum Anschluß von Teilnehmerendgeräten eingefügt. Auf jedem S₀-Bus S₀1, S₀2 ist eine beliebige Telekommunikationsanschlußeinheit TAE jeweils mit einem AC/DC-Wandler AC/DC1, AC/DC2 verbunden. Die AC/DC-Wandler AC/DC1, AC/DC2 sind außerhalb des Netzabschlusses NT angeordnet. Sie haben jeweils eine Eingangswechselspannung und eine Ausgangsgleichspannung. Die Eingangswechselspannung ist eine Spannung im Bereich von 220-230 Volt, die vom jeweiligen Teilnehmer selbst geliefert wird. Aus diesem Grund befinden sich die AC/DC-Wandler AC/DC1, AC/DC2 jeweils in den Räumen der Teilnehmer TN1, TN2. Die Ausgangsgleichspannung liegt im Bereich um 40 Volt und stellt eine Leistung von ca. 4,5 Watt zur Verfügung. Sie wird jeweils über eine Telekommunikationsanschlußeinheit TAE auf den jeweiligen S₀-Bus BUS1, BUS2 geschaltet und dient der Versorgung wenigstens eines Teilnehmerendgerätes TE11, TE21. Nur im Falle eines Ausfalls der Ausgangsgleichspannung des einen und/oder des anderen AC/DC-Wandlers AC/DC1, AC/DC2 wird ein Endgerät pro Teilnehmer über den DC/DC-Wandler DC/DC des Netzabschlusses notversorgt. Die beiden Teilnehmerendgeräte TE11, TE21 können über die beiden Spannungsüberwachungseinrichtung APS1 und APS2 unabhängig voneinander notversorgt werden.

Beim Ausführungsbeispiel sind die Netzabschlüsse außerhalb der Räume der Teilnehmer TN angeordnet. Dies hat den Vorteil, daß mehrere Netzabschlüsse unterschiedlicher Teilnehmer an einer zentralen Stelle angeordnet werden können, wodurch sich noch weitere schaltungstechnische Vereinfachungen für die einzelnen Netzabschlüsse ergeben können. Die Netzabschlüsse können auch, wie bisher innerhalb der Räume der Teilnehmer angeordnet werden. Es ist aber nicht mehr vonnöten sie an einen 230 Volt Anschluß anzuschließen. Es ist bei der Anwendung dieser Zuordnung sichergestellt, daß der Netzabschluß NT bis zur S₀-Schnittstelle S₀ im Netzbereich bleibt, und daß die Serviceleistungen des Netzbetreibers für den AC/DC-Wandler AC/DC wegfallen können. Damit werden die Bereitstellungskosten der Netzabschlüsse für den Netzbetreiber niedriger.

Im Ausführungsbeispiel dient jeweils ein AC/DC-Wandler zur Speisung wenigstens eines Teilnehmerendgerätes TE. Anstelle eines AC/DC-Wandlers kann auch jede beliebige Stromversorgung verwendet werden. So kann z.B. die ohnehin vorhandene Stromversorgung eines FAX-Gerätes oder eines Druckers dazu ausgenutzt werden, die 40 Volt Gleichspannung auf der Endstellenleitung BUS zur Versorgung von ein oder mehreren Teilnehmerendgeräten, wie z.B ISDN-Terminals, analoge oder digitale Telefone zur Verfügung zu stellen.

## Patentansprüche

1. Netzabschlußeinrichtung (NTE) zur Anbindung wenigstens eines Teilnehmerendgerätes (TE) an ein diensteintegrierendes digitales Netz, mit einem Netzabschluß (NT) und wenigstens einer Endstellenleitung (BUS) über die wenigstens ein Teilnehmerendgerät (TE) mit dem Netzabschluß (NT) verbindbar ist, bei der die wenigstens eine Endstellenleitung (BUS) jeweils über eine vom Netzabschluß (NT) unabhängige, separate Stromversorgung (AC/DC) speisbar ist,
bei der der Netzabschluß (NT) zwei S₀-Schnittstellen (S₀1, S₀2) und eine Steuereinheit (CPU) beinhaltet, bei der die Steuereinheit (CPU) Mittel zum Übertragen von in Rahmen strukturierten Informationen enthält, der netzseitige Rahmen mehrere Nutzinformationskanäle und wenigstens einen Signalisierungskanal enthält, und
bei der über die Steuereinheit (CPU) den S₀-Schnittstellen (S₀1, S₀2) jeweils nur ein Teil der netzseitig verfügbaren Nutzinformationskanäle nach vorgegebener Aufteilung zuweisbar ist.

2. Netzabschlußeinrichtung (NTE) nach Anspruch 1,
dadurch gekennzeichnet, daß die Stromversorgung (AC/DC) jeweils über eine Telekommunikationsanschlußeinheit (TAE) mit der zugehörigen Endstellenleitung (BUS) verbindbar ist.

3. Netzabschlußeinrichtung (NTE) nach Anspruch 1,
dadurch gekennzeichnet, daß eine Stromversorgung (AC/DC) einen AC/DC-Wandler beinhaltet.

4. Netzabschlußeinrichtung (NTE) nach Anspruch 3,
dadurch gekennzeichnet, daß die AC-Wechselspannung im Bereich 220-230 Volt liegt.

5. Netzabschlußeinrichtung (NTE) nach Anspruch 3,
dadurch gekennzeichnet, daß die DC-Gleichspannung im Bereich um 40 Volt liegt.

6. Netzabschlußeinrichtung (NTE) nach Anspruch 1,
dadurch gekennzeichnet, daß der Netzabschluß (NT) von dem oder den Teilnehmern (TN1, TN2) räumlich getrennt angeordnet ist.

7. Netzabschlußeinrichtung (NTE) nach Anspruch 1,
dadurch gekennzeichnet, daß eine Stromversorgung (AC/DC) Bestandteil eines Teilnehmerendgerätes (TE) ist.
